(19) Europäisches Patentamt
European Patent Office
Office européen des brevets

(11) EP 4 180 487 B1

(12) EUROPEAN PATENT SPECIFICATION

(45) Date of publication and mention of the grant of the patent:
**18.03.2026 Bulletin 2026/12**

(21) Application number: **22851001.2**

(22) Date of filing: **12.08.2022**

(51) International Patent Classification (IPC):
***C08L 67/02*** *(2006.01)* ***C08L 51/06*** *(2006.01)*
***C08L 25/12*** *(2006.01)* ***C08L 63/00*** *(2006.01)*
***C08K 7/14*** *(2006.01)* ***C08K 5/1515*** *(2006.01)*
***C08K 5/29*** *(2006.01)* ***C08K 5/3435*** *(2006.01)*

(52) Cooperative Patent Classification (CPC):
(C-Sets available)
**C08L 67/02; C08L 63/04;** C08L 25/12;
C08L 2205/02; C08L 2205/035 (Cont.)

(86) International application number:
**PCT/KR2022/012069**

(87) International publication number:
**WO 2023/033404 (09.03.2023 Gazette 2023/10)**

(54) **THERMOPLASTIC RESIN COMPOSITION, METHOD FOR PREPARING SAME, AND MOLDED PRODUCT COMPRISING SAME**

THERMOPLASTISCHE HARZZUSAMMENSETZUNG, VERFAHREN ZUR HERSTELLUNG DAVON UND FORMARTIKEL DAMIT

COMPOSITION DE RÉSINE THERMOPLASTIQUE, PROCÉDÉ DESTINÉ À SA PRÉPARATION ET PRODUIT MOULÉ LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2021 KR 20210116824**

(43) Date of publication of application:
**17.05.2023 Bulletin 2023/20**

(73) Proprietor: **LG CHEM, LTD.**
**Yeongdeungpo-gu**
**Seoul 07336 (KR)**

(72) Inventors:
- **KONG, Seonho**
**Daejeon 34122 (KR)**
- **KO, Gun**
**Daejeon 34122 (KR)**
- **SON, Sun Mo**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 692 794** **JP-B2- 5 217 425**
**KR-A- 20010 075 526** **KR-A- 20110 066 598**
**KR-A- 20110 066 598** **KR-A- 20140 018 292**
**US-A1- 2006 079 638** **US-A1- 2006 079 638**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 63/04, C08K 5/3492, C08K 7/14, C08L 25/12, C08L 51/04, C08L 67/02, C08L 67/02, C08L 79/00; C08L 67/02, C08L 25/12, C08L 51/04, C08L 63/04, C08L 67/02, C08L 79/00, C08K 5/3492, C08K 7/14**

## Description

[Technical Field]

[Cross-Reference to Related Application]

This application claims priority to Korean Patent Application No. 10-2021-0116824, filed on September 2, 2021, in the Korean Intellectual Property Office.

The present invention relates to a thermoplastic resin composition, a method of preparing the same, and a molded article including the same. More particularly, the present invention relates to a high-quality thermoplastic resin composition having excellent mechanical properties, heat resistance, and hydrolysis resistance and thus being applicable to automotive exterior materials and materials for electric/electronic parts, a method of preparing the thermoplastic resin composition, and a molded article including the thermoplastic resin composition.

[Background Art]

Among engineering plastics, a polybutylene terephthalate (hereinafter referred to as "PBT") resin is a crystalline material and has a fast crystallization rate and an appropriate molding temperature range. In addition, the PBT resin has heat resistance, chemical resistance, electrical properties, mechanical strength, and molding processability superior to those of other materials. Due to these advantages, the PBT resin has been applied to various fields such as automobiles, electric/electronic devices, and office equipment.

Since automotive exterior materials are directly exposed to external environments, automotive exterior materials are required to have superior mechanical properties, heat resistance, weather resistance, and the like, compared to automotive interior materials. Thus, a material of PBT resin/acrylate-styrene-acrylonitrile resin/glass fiber has been used to manufacture automotive exterior materials. Since the weather resistance of the material is improved due to the acrylate-styrene-acrylonitrile resin, and the mechanical properties thereof is increased due to the glass fiber, the material is usefully used as an automotive exterior material.

However, PBT resins have low hydrolysis resistance, making it difficult to apply the PBT resins to various fields. In particular, in the case of materials for electric/electronic parts exposed to high-temperature and high-humidity environments, due to deterioration of mechanical properties due to hydrolysis, relatively weak fastening portions are prone to damage.

When a hydrolysis resistance increasing agent is added to increase the hydrolysis resistance of the PBT resin, mechanical properties and heat resistance are deteriorated.

Therefore, it is necessary to develop a material having excellent mechanical properties, heat resistance, and hydrolysis resistance.

[Related Art Documents]

[Patent Documents]

KR 10-1201832 B1 KR20110066598A discloses a thermoplastic resin composition comprising PBT, PET, graft copolymer, SAN and glass fibres.

[Disclosure]

[Technical Problem]

Therefore, the present invention has been made in view of the above problems, and it is one object of the present invention to provide a thermoplastic resin composition having excellent mechanical properties, heat resistance, and hydrolysis resistance.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

[Technical Solution]

In accordance with one aspect of the present invention, provided is a thermoplastic resin composition including

30 to 50 % by weight of a polybutylene terephthalate resin (A); 8 to 20 % by weight of a polyethylene terephthalate resin (B); 3 to 15 % by weight of an acrylate-aromatic vinyl compound-vinyl cyanide compound graft copolymer (C); 3 to 15 % by weight of an aromatic vinyl compound-vinyl cyanide compound copolymer (D); 25 to 40 % by weight of glass fiber (E); 0.15 to 1 % by weight of a carbodiimide-based compound (F); 0.5 to 1.5 % by weight of an epoxy compound (G); and 0.25 to 1.2 % by weight of a hindered amine-based light stabilizer (H).

In addition, the present invention may provide a thermoplastic resin composition including 30 to 50 % by weight of a polybutylene terephthalate resin (A); 8 to 20 % by weight of a polyethylene terephthalate resin (B); 3 to 15 % by weight of an acrylate-aromatic vinyl compound-vinyl cyanide compound graft copolymer (C); 3 to 15 % by weight of an aromatic vinyl compound-vinyl cyanide compound copolymer (D); 25 to 40 % by weight of glass fiber (E); 0.15 to 1 % by weight of a carbodiimide-based compound (F); 0.5 to 1.5 % by weight of an epoxy compound (G); and 0.25 to 1.2 % by weight of a hindered amine-based light stabilizer (H), wherein when flexural strength is measured at a span of 64 mm and a speed of 2 mm/min according to ISO 178 before and after an Air-HAST test (120 °C, RH: 85 %, air partial pressure: 0.06 MPa, 96 hours), and flexural strength retention rate is calculated by Equation 1 below, the thermoplastic resin composition has a flexural strength retention rate of 60 % or more:

[Equation 1]

$$\text{Flexural strength retention rate (\%)} = [FS'/FS] \times 100,$$

wherein FS is flexural strength before the Air-HAST test, and FS' is flexural strength after the Air-HAST test.

In addition, the present invention may provide a thermoplastic resin composition including 30 to 50 % by weight of a polybutylene terephthalate resin (A); 8 to 20 % by weight of a polyethylene terephthalate resin (B); 3 to 15 % by weight of an acrylate-aromatic vinyl compound-vinyl cyanide compound graft copolymer (C); 3 to 15 % by weight of an aromatic vinyl compound-vinyl cyanide compound copolymer (D); 25 to 40 % by weight of glass fiber (E); 0.15 to 1 % by weight of a carbodiimide-based compound (F); 0.5 to 1.5 % by weight of an epoxy compound (G); and 0.25 to 1.2 % by weight of a hindered amine-based light stabilizer (H), wherein the thermoplastic resin composition has a melt flow rate of 6 g/10 min or more as measured at 260 °C under a load of 2.16 kg according to ISO 1133.

The polybutylene terephthalate resin (A) may have an intrinsic viscosity of preferably 0.6 to 0.9 dl/g.

The polyethylene terephthalate resin (B) may be preferably a homopolymer.

The acrylate-aromatic vinyl compound-vinyl cyanide compound graft copolymer (C) may include preferably 23 to 35 % by weight of a vinyl cyanide compound based on a total weight thereof.

The aromatic vinyl compound-vinyl cyanide compound copolymer (D) may include preferably 26 to 40 % by weight of a vinyl cyanide compound based on a total weight thereof.

The glass fiber (E) may include preferably 50 to 70 % by weight of silica ($SiO_2$) based on a total weight thereof.

The carbodiimide-based compound (F) may preferably include a compound represented by Chemical Formula 1 below, a compound represented by Chemical Formula 2 below, or a mixture thereof:

[Chemical Formula 1]

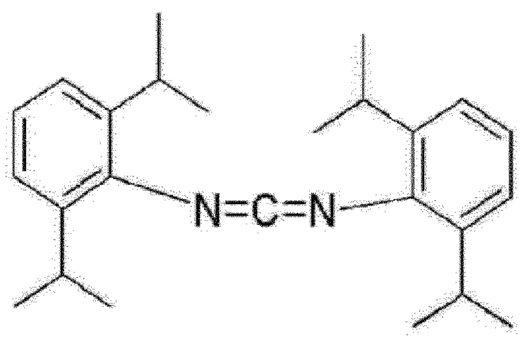

[Chemical Formula 2]

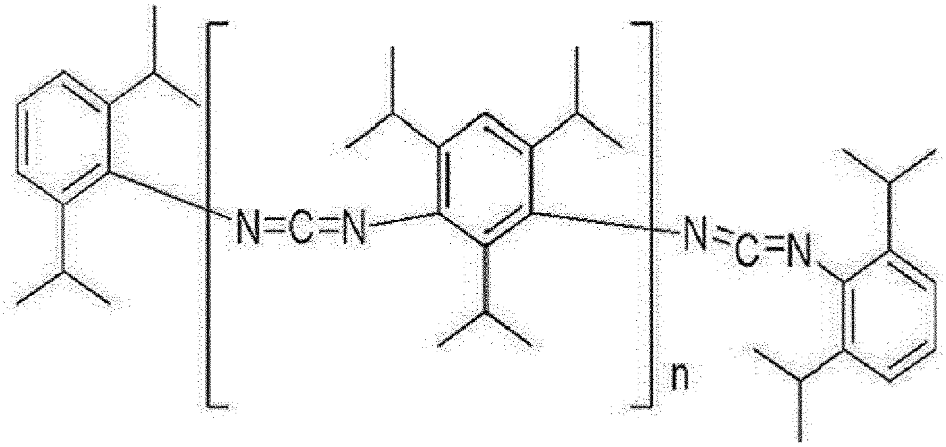

,

wherein, in Chemical Formula 2, n is an integer from 1 to 15.

The epoxy compound (G) may include preferably one or more selected from the group consisting of an aromatic epoxy resin, an alicyclic epoxy resin, and an aliphatic epoxy resin.

The hindered amine-based light stabilizer (H) may include preferably one or more selected from the group consisting of poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]], bis(2,2,6,6-tetramethyl-4-piperidyl)sebacate, decanedioic acid bis (2,2,6,6-tetramethyl-1-(octyloxy)-4-piperidinyl)ester, 1,1-dimethylethylhydroperoxide, bis(1,2,2,6,6-pentamethyl-4-piperidyl[[3,5-bis(1,1-dimethylethyl)-4-hydroxyphenyl]methyl]butylmalonate, bis(1,2,2,6,6-pentamethyl-4-piperidyl)-sebacate, and methyl-1,2,2,6,6-pentamethyl-4-piperidylsebacate.

The thermoplastic resin composition may have a tensile strength of preferably 145 MPa or more as measured at a speed of 50 mm/min according to ISO 527.

In accordance with another aspect of the present invention, provided is a method of preparing a thermoplastic resin composition, the method including melt-kneading and extruding, at 200 to 300 °C and 100 to 300 rpm, 30 to 50 % by weight of a polybutylene terephthalate resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H).

In addition, the present invention may provide a method of preparing a thermoplastic resin composition, the method including melt-kneading and extruding, at 200 to 300 °C and 100 to 300 rpm, 30 to 50 % by weight of a polybutylene terephthalate resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H), wherein, when flexural strength is measured at a span of 64 mm and a speed of 2 mm/min according to ISO 178 before and after the Air-HAST test (120 °C, RH: 85 %, air partial pressure: 0.06 MPa, 96 hours), and flexural strength retention rate is calculated by Equation 1 below, the thermoplastic resin composition has a flexural strength retention rate of 60 % or more:

$$\text{Flexural strength retention rate (\%)} = [FS'/FS] \times 100, \qquad \text{[Equation 1]}$$

wherein FS is flexural strength before the Air-HAST test, and FS' is flexural strength after the Air-HAST test.

In addition, the present invention may provide a method of preparing a thermoplastic resin composition, the method including melt-kneading and extruding, at 200 to 300 °C and 100 to 300 rpm, 30 to 50 % by weight of a polybutylene terephthalate resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H), wherein the thermoplastic resin composition has a melt flow rate of 6 g/10 min or more as

measured at 260 °C under a load of 2.16 kg according to ISO 1133.

In accordance with yet another aspect of the present invention, provided is a molded article including the thermoplastic resin composition.

The molded article may be preferably an automotive exterior material or an electric/electronic part.

[Advantageous effects]

According to the present invention, the present invention has an effect of providing a high-quality thermoplastic resin composition having excellent mechanical properties, heat resistance, and hydrolysis resistance and thus being applicable to automotive exterior materials and materials for electric/electronic parts, a method of preparing the thermoplastic resin composition, and a molded article including the thermoplastic resin composition.

[Best mode]

Hereinafter, a thermoplastic resin composition, a method of preparing the same, and a molded article including the same according to the present invention will be described in detail.

The present inventors confirmed that, when a polybutylene terephthalate resin, a polyethylene terephthalate resin, an acrylate-aromatic vinyl compound-vinyl cyanide compound graft copolymer, an aromatic vinyl compound-vinyl cyanide compound copolymer, glass fiber, a carbodiimide-based compound, an epoxy compound, and a hindered amine-based light stabilizer were adjusted in a predetermined content ratio, mechanical properties, such as impact strength and tensile strength, and heat resistance were excellent, and hydrolysis resistance was improved. Based on these results, the present inventors conducted further studies to complete the present invention.

The thermoplastic resin composition according to the present invention will be described in detail as follows.

The thermoplastic resin composition of the present invention includes 30 to 50 % by weight of a polybutylene terephthalate resin (A); 8 to 20 % by weight of a polyethylene terephthalate resin (B); 3 to 15 % by weight of an acrylate-aromatic vinyl compound-vinyl cyanide compound graft copolymer (C); 3 to 15 % by weight of an aromatic vinyl compound-vinyl cyanide compound copolymer (D); 25 to 40 % by weight of glass fiber (E); 0.15 to 1 % by weight of a carbodiimide-based compound (F); 0.5 to 1.5 % by weight of an epoxy compound (G); and 0.25 to 1.2 % by weight of a hindered amine-based light stabilizer (H). In this case, mechanical properties, such as impact strength, tensile strength, flexural strength, and flexural modulus, heat resistance, and hydrolysis resistance may be excellent. Thus, the thermoplastic resin composition may be suitable for automotive exterior materials and materials for electric/electronic parts.

Hereinafter, each component of the thermoplastic resin composition of the present invention will be described in detail.

## (A) Polybutylene terephthalate resin

For example, based on a total weight of the thermoplastic resin composition, the polybutylene terephthalate resin (A) may be included in an amount of 30 to 50 % by weight, preferably 35 to 45 % by weight, more preferably 37 to 42 % by weight. Within this range, mechanical properties, such as impact strength, tensile strength, elongation, flexural strength, and flexural modulus, melt flow rate, and heat resistance may be excellent.

The polybutylene terephthalate resin (A) may have an intrinsic viscosity of preferably 0.6 to 0.9 dl/g, more preferably 0.7 to 0.9 dl/g, still more preferably 0.75 to 0.85 dl/g. Within this range, due to proper melt flow rate, processability, molding processability, and molding stability may be excellent.

In the present disclosure, when intrinsic viscosity is measured, unless noted otherwise, a sample to be measured is completely dissolved in methylene chloride, and then is filtered using a filter to obtain a filtrate. Then, using the obtained filtrate, intrinsic viscosity is measured at 20 °C using a Ubbelohde viscometer.

As the polybutylene terephthalate resin (A), a conventional polybutylene terephthalate resin may be used without particular limitation. For example, the polybutylene terephthalate resin (A) may be a polymer obtained by condensation polymerization of 1,4-butanediol and dimethyl terephthalate.

A method of preparing a polybutylene terephthalate resin commonly practiced in the art to which the present invention pertains may be used to prepare the polybutylene terephthalate resin (A).

## (B) Polyethylene terephthalate resin

For example, based on a total weight of the thermoplastic resin composition, the polyethylene terephthalate resin (B) may be included in an amount of 8 to 20 % by weight, preferably 10 to 17 % by weight, more preferably 11 to 15 % by weight. Within this range, mechanical properties, such as impact strength, tensile strength, elongation, flexural strength, and flexural modulus, melt flow rate, and heat resistance may be excellent.

The polyethylene terephthalate resin (B) may be preferably a homopolymer. In this case, mechanical properties, particularly flexural strength and flexural modulus, may be excellent, and heat resistance may also be excellent.

In the present disclosure, the polyethylene terephthalate homopolymer refers to a polymer obtained by condensation polymerization of a diacid compound and a di-alcohol as a monomer, specifically a polymer obtained by condensation polymerization of terephthalic acid or terephthalic acid dimethyl and ethylene glycol.

The polyethylene terephthalate homopolymer (B) may have an intrinsic viscosity of preferably 0.6 to 1.2 dl/g, more preferably 0.6 to 1.1 dl/g, still more preferably 0.6 to 1 dl/g, still more preferably 0.7 to 0.9 dl/g. Within this range, due to proper melt flow rate, processability, molding processability, and molding stability may be excellent.

## (C) Acrylate-aromatic vinyl compound-vinyl cyanide compound graft copolymer

For example, based on a total weight of the thermoplastic resin composition, the graft copolymer (C) may be included in an amount of 3 to 15 % by weight, preferably 5 to 13 % by weight, more preferably 7 to 10 % by weight. Within this range, melt flow rate, heat resistance, and mechanical properties, particularly impact strength at room temperature and low temperature, may be excellent.

The acrylate-aromatic vinyl compound-vinyl cyanide compound graft copolymer (C) may be a graft copolymer including preferably 23 to 35 % by weight, more preferably 25 to 33 % by weight, still more preferably 25 to 31 % by weight of a vinyl cyanide compound. Within this range, mechanical properties, particularly impact strength at room temperature and low temperature, and heat resistance may be excellent.

For example, the graft copolymer (C) may be a graft copolymer including 23 to 35 % by weight of a vinyl cyanide compound, 30 to 45 % by weight of acrylate-based rubber, and 25 to 40 % by weight of an aromatic vinyl compound, preferably a graft copolymer including 25 to 33 % by weight of a vinyl cyanide compound, 35 to 43 % by weight of acrylate-based rubber, and 30 to 37 % by weight of an aromatic vinyl compound, more preferably a graft copolymer including 25 to 31 % by weight of a vinyl cyanide compound, 38 to 43 % by weight of acrylate-based rubber, and 30 to 35 % by weight of an aromatic vinyl compound. Within this range, melt flow rate, heat resistance, and mechanical properties, particularly impact strength at room temperature and low temperature, may be excellent.

For example, the acrylate-based rubber is acrylate-containing rubber, and may have an average particle diameter of 400 to 2,500 Å, preferably 500 to 2,000 Å, more preferably 700 to 1,500 Å. Within this range, especially at room temperature and low temperature, impact strength may be excellent.

In the present disclosure, average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 μsec.

For example, the graft copolymer (C) may have a grafting degree of 20 to 60 %, preferably 25 to 55 %, more preferably 30 to 50 %, still more preferably 30 to 40 %. Within this range, especially at room temperature and low temperature, impact strength may be excellent.

In the present disclosure, when a grafting degree is measured, graft polymer latex is coagulated, washed, and dried to obtain powdered graft polymer latex, and 30 ml of acetone is added to 2 g of the powdered graft polymer latex, followed by stirring for 24 hours. Then, ultracentrifugation is performed to separate insoluble matter that is not dissolved in acetone, followed by drying at 60 to 120 °C. Then, the weight of the insoluble matter is measured. The measured value is substituted into Equation 2 below to calculate a grafting degree.

$$\text{Grafting degree (\%)} = [\text{Weight (g) of grafted monomers/Rubber weight (g)}] \times 100 \qquad \text{[Equation 2]}$$

In Equation 2, the weight of grafted monomers (g) is obtained by subtracting rubber weight (g) from the weight of insoluble substances (gel) obtained by dissolving a graft copolymer in acetone and performing centrifugation, and the rubber weight (g) is the weight (g) of rubber components theoretically added to graft copolymer powder.

In the present disclosure, a polymer including a certain compound means a polymer prepared by polymerizing the compound, and a unit in the polymer is derived from the compound.

For example, the acrylate of the present invention may include one or more selected from the group consisting of alkyl acrylates containing an alkyl group having 2 to 8 carbon atoms, preferably an alkyl acrylate containing an alkyl group having 4 to 8 carbon atoms, still more preferably butyl acrylate, ethylhexyl acrylate, or a mixture thereof.

For example, the vinyl cyanide compound of the present invention may include one or more selected from the

group consisting of acrylonitrile, methacrylonitrile, ethylacrylonitrile, and isopropylacrylonitrile, preferably acrylonitrile.

For example, the aromatic vinyl compound of the present invention may include one or more selected from the group consisting of styrene, α-methyl styrene, o-methyl styrene, p-methyl styrene, m-methyl styrene, ethyl styrene, isobutyl styrene, t-butyl styrene, o-bromostyrene, p-bromostyrene, m-bromostyrene, o-chlorostyrene, p-chlorostyrene, m-chlorostyrene, vinyltoluene, vinylxylene, fluorostyrene, and vinylnaphthalene, preferably styrene.

Preparation methods commonly used in the art to which the present invention pertains may be used to prepare the graft copolymer (C) without particular limitation. For example, the graft copolymer (C) may be prepared by suspension polymerization, emulsion polymerization, solution polymerization, or bulk polymerization, preferably emulsion polymerization.

### (D) Aromatic vinyl compound-vinyl cyanide compound copolymer

For example, based on a total weight of the thermoplastic resin composition, the aromatic vinyl compound-vinyl cyanide compound copolymer (D) may be included in an amount of 3 to 15 % by weight, preferably 5 to 13 % by weight, more preferably 7 to 10 % by weight. Within this range, melt flow rate and mechanical properties, particularly flexural modulus, may be excellent, and heat deflection temperature may be excellent at both high and low loads.

The aromatic vinyl compound-vinyl cyanide compound copolymer (D) may be a copolymer including preferably 26 to 40 % by weight, more preferably 26 to 35 % by weight, still more preferably 27 to 32 % by weight of a vinyl cyanide compound. Within this range, melt flow rate and mechanical properties, particularly flexural modulus, may be excellent, and heat resistance may be excellent at both high and low loads.

In the present disclosure, in heat resistance evaluation, the high load is 1.80 MPa, and the low load is 0.45 MPa.

For example, the aromatic vinyl compound-vinyl cyanide compound copolymer (D) may have a weight average molecular weight of 100,000 to 180,000 g/mol, preferably 120,000 to 150,000 g/mol. Within this range, processability and injection stability may be excellent while mechanical properties are maintained at a certain level.

In the present disclosure, weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. Specifically, the weight average molecular weight is a weight average molecular weight (Mw) converted based on polystyrene by gel permeation chromatography (GPC, PL GPC220, Agilent Technologies). More specifically, weight average molecular weight is measured through gel permeation chromatography (GPC, Waters 2410 RI detector, 515 HPLC pump, 717 auto sampler). 0.02 g of each polymer is dissolved in 20 ml of tetrahydrofuran (THF), filtered using a 0.45 μm filter, and placed in a GPC vial (4 ml) to prepare each sample. From 1 hour before start of measurement, the solvent (THF) is injected at a rate of 1.0 mL/min, and measurement is performed under conditions of a measurement time of 25 minutes, an injection volume of 150 μL, a flow rate of 1.0 ml/min, an isocratic pump mode, and an RI detector (condition: 40). At this time, calibration may be performed using a polystyrene standard (PS), and data processing may be performed using ChemStation.

For example, the aromatic vinyl compound-vinyl cyanide compound copolymer (D) may be a styrene-acrylonitrile copolymer (SAN resin), an α-methylstyrene-acrylonitrile copolymer (heat-resistant SAN resin), or a mixture thereof, more preferably a styrene-acrylonitrile copolymer (SAN resin). In this case, heat resistance may be excellent at both high and low loads while mechanical properties and melt flow rate are maintained at a certain level.

Preparation methods commonly used in the art to which the present invention pertains may be used to prepare the aromatic vinyl compound-vinyl cyanide compound copolymer (D) without particular limitation. For example, the aromatic vinyl compound-vinyl cyanide compound copolymer (D) may be prepared by suspension polymerization, emulsion polymerization, solution polymerization, or bulk polymerization, preferably bulk polymerization. In this case, heat resistance and melt flow rate may be excellent.

### (E) Glass fiber

For example, based on a total weight of the thermoplastic resin composition, the glass fiber (E) may be included in an amount of 25 to 40 % by weight, preferably 25 to 35 % by weight, more preferably 27 to 32 % by weight. Within this range, melt flow rate, mechanical properties, and heat resistance may be excellent.

Based on a total weight thereof, the glass fiber (E) may include preferably 50 to 70 % by weight, more preferably 51 to 65 % by weight, still more preferably 51 to 58 % by weight of silica ($SiO_2$). Within this range, tensile strength, flexural strength, and flexural modulus may be excellent while melt flow rate and impact strength are maintained, and heat resistance may be excellent, especially at a low load.

Specifically, the glass fiber (E) may be preferably glass fiber including 50 to 70 % by weight of silica ($SiO_2$), 16 to 30 % by weight of aluminum oxide ($Al_2O_3$), 5 to 25 % by weight of calcium oxide (CaO), and 5 to 20 % by weight of other components including MaO, more preferably glass fiber including 51 to 65 % by weight of silica ($SiO_2$), 17 to 28 % by weight of aluminum oxide ($Al_2O_3$), 10 to 24 % by weight of calcium oxide (CaO), and 8 to 18 % by weight of other components

including MaO, still more preferably glass fiber including 51 to 58 % by weight of silica ($SiO_2$), 17 to 24 % by weight of aluminum oxide ($Al_2O_3$), 15 to 22 % by weight of calcium oxide (CaO), and 10 to 15 % by weight of other components including MaO. Within this range, tensile strength, flexural strength, and flexural modulus may be excellent while melt flow rate and impact strength are maintained, and heat resistance may be excellent, especially at a low load.

The other components including MaO may include one or more selected from the group consisting of MgO, $Na_2O$, $K_2O$, $Li_2O$, $Fe_2O_3$, $B_2O_3$, and SrO.

For example, the glass fiber (E) may have an average diameter of 3 to 25 μm, preferably 5 to 20 μm, more preferably 8 to 15 μm. Within this range, due to improvement in compatibility with resins, mechanical strength may be increased, and a final product may have excellent appearance.

For example, the glass fiber (E) may have an average length of 1 to 15 mm, preferably 2 to 7 mm, more preferably 2.5 to 5 mm. Within this range, due to improvement in compatibility with resins, mechanical strength may be increased, and a final product may have excellent appearance.

In the present disclosure, when the average length and average diameter of glass fiber are measured, the length and diameter of 30 glass fibers are measured using a scanning electron microscope (SEM), and an average value thereof is calculated.

For example, the glass fiber (E) may be chopped glass fiber. In this case, compatibility may be excellent.

In the present disclosure, chopped glass fiber commonly used in the art to which the present invention pertains may be used in the present invention without particular limitation.

For example, the glass fiber (E) may have an aspect ratio (L/D) of average length (L) to average diameter (D) of 200 to 550, preferably 220 to 450, more preferably 250 to 350, still more preferably 270 to 320. Within this range, due to improvement in compatibility with resins, excellent appearance may be implemented.

For example, the glass fiber (E) may be surface-treated with a silane-based compound, a urethane-based compound, or a mixture thereof, preferably a surface treatment agent including one or more selected from the group consisting of an amino silane-based compound, an epoxy silane-based compound, and a urethane-based compound, more preferably an epoxy silane-based compound. In this case, glass fiber may be evenly dispersed in a polybutylene terephthalate resin and a polyethylene terephthalate resin, and thus mechanical strength, heat resistance, and the surface properties of an injection-molded product may be excellent.

For example, based on 100 % by weight in total of the surface-treated glass fiber (glass fiber + surface treatment agent), the surface treatment agent may be included in an amount of 0.1 to 10 % by weight, preferably 0.1 to 5 % by weight, more preferably 0.1 to 3 % by weight, still more preferably 0.1 to 0.8 % by weight, still more preferably 0.2 to 0.5 % by weight. Within this range, mechanical properties, physical property balance, and the appearance of a final product may be excellent.

As the amino silane-based compound, an amino silane generally used as a sizing agent or a coating agent for glass fiber may be used without particular limitation. For example, the amino silane-based compound may include one or more selected from the group consisting of gamma-glycidoxypropyl triethoxy silane, gamma-glycidoxypropyl trimethoxy silane, gamma-glycidoxypropyl methyldiethoxy silane, gamma-glycidoxypropyl triethoxy silane, 3-mercaptopropyl trimethoxy silane, vinyltrimethoxysilane, vinyltriethoxy silane, gamma-methacryloxypropyl trimethoxy silane, gamma-methacryloxypropyl triethoxy silane, gamma-aminopropyl trimethoxy silane, gamma-aminopropyl triethoxy silane, 3-isocyanate propyltriethoxy silane, gamma-acetoacetatepropyl trimethoxysilane, acetoacetatepropyl triethoxy silane, gamma-cyanoacetyl trimethoxy silane, gamma-cyanoacetyl triethoxy silane, and acetoxyaceto trimethoxy silane. In this case, mechanical properties, heat resistance, and the surface properties of an extruded product may be excellent.

As the epoxy silane-based compound, an epoxy silane generally used as a coating agent for glass fiber may be used without particular limitation. For example, the epoxy silane-based compound may include one or more selected from the group consisting of 3-glycidyloxypropyltrimethoxysilane, 3-glycidyloxypropyltriethoxysilane, 3-glycidyloxypropyl(dimethoxy)methylsilane, and 2-(3,4-epoxycyclohexyl)ethyltrimethoxysilane. In this case, mechanical properties, heat resistance, and the surface properties of an extruded product may be excellent.

The content of the glass fiber (E) may be appropriately selected within the range commonly used in the art according to the definition of the present invention, and the cross-sectional shape thereof may have a cylindrical shape, an oval shape, or the like, without particular limitation.

**(F) Carbodiimide-based compound**

For example, based on a total weight of the thermoplastic resin composition, the carbodiimide-based compound (F) may be included in an amount of 0.15 to 1 % by weight, preferably 0.15 to 0.7 % by weight, more preferably 0.2 to 0.5 % by weight. Within this range, mechanical properties, heat resistance, and hydrolysis resistance may be excellent, thereby improving flexural strength retention rate.

For example, the carbodiimide-based compound (F) may include a compound represented by Chemical Formula 1 below, a compound represented by Chemical Formula 2 below, or a mixture thereof. In this case, mechanical properties,

heat resistance, and flexural strength retention rate may be excellent.

[Chemical Formula 1]

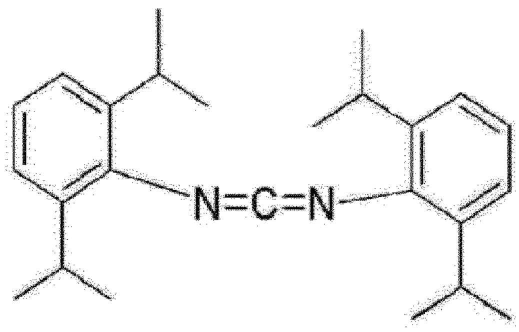

[Chemical Formula 2]

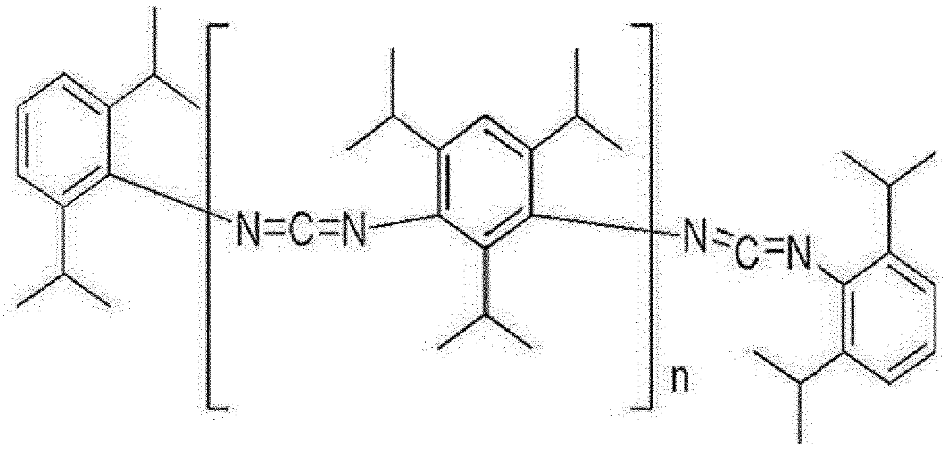

In Chemical Formula 2, n is an integer from 1 to 15.

For example, the carbodiimide-based compound (F) may have a melting point of 56 to 95 °C, preferably 60 to 90 °C. Within this range, mechanical properties may be excellent.

In the present disclosure, melting point may be measured using a differential scanning calorimeter 2920 (DSC 2920, TA Co.). As a specific example of measuring melting point, after a DSC is equilibrated at a temperature of 0 °C, the temperature is increased to 180 °C at a rate of 20 °C/min, the temperature is reduced to -60 °C at a rate of 20 °C/min, and then the temperature is increased to 180 °C at a rate of 10 °C/min. At this time, in the second temperature increase section, melting point is obtained from the top region of an endothermic curve.

For example, the carbodiimide-based compound (F) may be a carbodiimide-based polymer. In this case, mechanical properties may be excellent.

In the present disclosure, a carbodiimide-based polymer having a melting point of 56 to 96 °C may be used without particular limitation.

For example, the carbodiimide-based compound (F) may have a weight average molecular weight of 500 to 4,000 g/mol, preferably 1,000 to 3,000 g/mol. Within this range, mechanical properties may be further improved.

**(G) Epoxy compound**

For example, based on a total weight of the thermoplastic resin composition, the epoxy compound (G) may be included in an amount of 0.5 to 1.5 % by weight, preferably 0.5 to 1.2 % by weight, more preferably 0.6 to 0.9 % by weight. Within this range, mechanical properties, heat resistance, and hydrolysis resistance may be excellent, thereby improving flexural strength retention rate.

The epoxy compound (G) binds to a carboxyl group at the terminal of the polybutylene terephthalate resin (A) in the presence of the hindered amine-based light stabilizer (H) to be described later to improve hydrolysis resistance.

The epoxy compound (G) contains at least two epoxy groups, and the types of the epoxy compound are not

particularly limited. For example, one or more selected from the group consisting of an aromatic epoxy resin, an alicyclic epoxy resin, and an aliphatic epoxy resin may be used.

The aromatic epoxy resin contains an aromatic group. For example, the aromatic epoxy resin may include one or more selected from the group consisting of a bisphenol-type epoxy resin, a novolac-type epoxy resin, a cresol epoxy resin, and a resorcinol glycidyl ether resin, preferably a novolac-type epoxy resin.

For example, the bisphenol-type epoxy resin may include one or more selected from the group consisting of a bisphenol A-based epoxy resin, a bisphenol F-based epoxy resin, a bisphenol S-based epoxy resin, and a brominated bisphenol-based epoxy resin.

For example, the novolac-type epoxy resin may include one or more selected from the group consisting of a phenol novolac-type epoxy resin and a cresol novolac-type epoxy resin.

The alicyclic epoxy resin is a compound in which an epoxy group is formed between two adjacent carbon atoms constituting an aliphatic ring. For example, the alicyclic epoxy resin may include one or more selected from the group consisting of dicyclopentadiene dioxide, limonene dioxide, 4-vinylcyclohexene dioxide, 2,4-epoxycyclohexylmethyl, 3,4-epoxycyclohexanecarboxylate, dicyclopentadiene dioxide, and bis(3,4-epoxycyclohexylmethyl)adipate.

For example, the aliphatic epoxy resin may include one or more selected from the group consisting of polyglycidyl ethers of aliphatic polyhydric alcohols and polyglycidyl ethers of alkylene oxide adducts of aliphatic polyhydric alcohols.

For example, the aliphatic polyhydric alcohol has preferably 2 to 20 carbon atoms, and specifically may be an aliphatic diol, an alicyclic diol, or a trivalent or higher polyol.

For example, the aliphatic diol may include one or more selected from the group consisting of ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, and 1,10-decanediol.

For example, the alicyclic diol may include one or more selected from the group consisting of cyclohexanedimethanol, cyclohexanediol, hydrogenated bisphenol A, and hydrogenated bisphenol F.

For example, the trivalent or higher polyol may include one or more selected from the group consisting of trimethylolethane, trimethylolpropane, hexitols, pentitols, glycerin, polyglycerin, pentaerythritol, dipentaerythritol, and tetramethylolpropane.

For example, the alkylene oxide may include one or more selected from the group consisting of ethylene oxide, propylene oxide, and butylene oxide.

### (H) Hindered amine-based light stabilizer

For example, based on a total weight of the thermoplastic resin composition, the hindered amine-based light stabilizer (H) may be included in an amount of 0.25 to 1.2 % by weight, preferably 0.25 to 1 % by weight, more preferably 0.3 to 0.8 % by weight. Within this range, mechanical properties may be excellent, and heat resistance and flexural strength retention rate may be further improved.

For example, the hindered amine-based light stabilizer (H) may include one or more selected from the group consisting of poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]], bis(2,2,6,6-tetramethyl-4-piperidyl)sebacate, decanedioic acid bis (2,2,6,6-tetramethyl-1-(octyloxy)-4-piperidinyl)ester, 1,1-dimethylethylhydroperoxide, bis(1,2,2,6,6-pentamethyl-4-piperidyl[[3,5-bis(1,1-dimethylethyl)-4-hydroxyphenyl]methyl]butylmalonate, bis(1,2,2,6,6-pentamethyl-4-piperidyl)-sebacate, and methyl-1,2,2,6,6-pentamethyl-4-piperidylsebacate, preferably poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]. In this case, heat resistance may be further improved, and discoloration may be prevented while mechanical strength is maintained.

In the present disclosure, the total weight of the thermoplastic resin composition means a total weight of the polybutylene terephthalate resin (A), the polyethylene terephthalate resin (B), the acrylate-aromatic vinyl compound-vinyl cyanide compound graft copolymer (C), the aromatic vinyl compound-vinyl cyanide compound copolymer (D), the glass fiber (E), the carbodiimide-based compound (F), the epoxy compound (G), and the hindered amine-based light stabilizer (H).

### Additives

For example, the thermoplastic resin composition may include one or more additives selected from the group consisting of an antioxidant, a lubricant, and a transesterification inhibitor. In this case, processability, light resistance, and mechanical properties may be improved.

For example, the antioxidant may be a phenol-based antioxidant, a phosphorus-based antioxidant, or a mixture

thereof, preferably a phenol-based antioxidant. In this case, oxidation by heat may be prevented during an extrusion process, and mechanical properties and heat resistance may be excellent.

For example, the phenol-based antioxidant may include one or more selected from the group consisting of N,N'-hexane-1,6-diyl-bis[3-(3,5-di-t-butyl-4-hydroxyphenyl propionamide)], pentaerythritol tetrakis[3-(3,5-di-t-butyl-4-hydroxyphenyl)propionate], N,N'-hexamethylene-bis(3,5-dit-butyl-4-hydroxy-hydrocinnamamide), triethylene glycol-bis[3-(3-t-butyl-5-methyl-4-hydroxyphenyl)propionate], 3,5-di-t-butyl-4-hydroxybenzylphosphonate-diethylester, 1,3,5-trimethyl-2,4,6-tris(3,5-di-t-butyl-4-hydroxybenzyl)benzene, and 1,3,5-tris(4-t-butyl-3-hydroxy-2,6-dimethylbenzyl)isocyanurate. In this case, heat resistance may be greatly improved while physical property balance is maintained.

For example, the phosphorus-based antioxidant may include one or more selected from the group consisting of triphenyl phosphite, tris(nonylphenyl)phosphite, tris(2,4-di-tert-butylphenyl)phosphite, tris(2,6-di-tert-butylphenyl) phosphite, tridecyl phosphite, trioctyl phosphite, trioctadecyl phosphite, dodecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl)pentaerythritol diphosphite, 2,2-methylene-bis(4,6-di-tert-butylphenyl)octylphosphite, bis(nonylphenyl)pentaerythritol diphosphite, bis(2,4-di-tert-butylphenyl)pentaerythritol diphosphite, stearyl pentaerythritol diphosphite, tributylphosphate, triethylphosphate, and trimethylphosphate.

Based on a total weight of the thermoplastic resin composition, the antioxidant may be included in an amount of preferably 0.05 to 1 % by weight, more preferably 0.1 to 0.8 % by weight, still more preferably 0.2 to 0.6 % by weight. Within this range, physical property balance may be excellent, and heat resistance may be improved.

When the additives are included in the thermoplastic resin composition, the total weight of the thermoplastic resin composition of the present invention means a total weight of the polybutylene terephthalate resin (A), the polyethylene terephthalate resin (B), the acrylate-aromatic vinyl compound-vinyl cyanide compound graft copolymer (C), the aromatic vinyl compound-vinyl cyanide compound copolymer (D), the glass fiber (E), the carbodiimide-based compound (F), the epoxy compound (G), the hindered amine-based light stabilizer (H), the antioxidant, the lubricant, and the transesterification inhibitor.

For example, the lubricant may include one or more selected from the group consisting of polyethylene-based wax, a sodium-neutralized ethylene-methacrylic acid copolymer, and sodium-neutralized montanic acid wax, preferably polyethylene-based wax, more preferably oxidized high-density polyethylene wax. In this case, heat resistance and melt flow rate may be improved.

The polyethylene-based wax has polarity and penetrates between polymers to allow chains to slide well and to induce intermolecular flow.

For example, based on a total weight of the thermoplastic resin composition, the lubricant may be included in an amount of 0.1 to 5 % by weight, preferably 0.1 to 3 % by weight, more preferably 0.2 to 1 % by weight, still more preferably 0.2 to 0.5 % by weight. Within this range, mechanical properties may be excellent, and heat resistance and melt flow rate may be improved.

For example, the transesterification inhibitor may be a metal phosphate-based compound, and may include preferably one or more selected from the group consisting of sodium phosphate monobasic, potassium phosphate monobasic, sodium phosphate dibasic, potassium phosphate dibasic, sodium phosphate tribasic, potassium phosphate tribasic, and calcium phosphate. In this case, physical property balance may be excellent, and mechanical properties and melt flow rate may be improved.

For example, based on a total weight of the thermoplastic resin composition, the transesterification inhibitor may be included in an amount of 0.01 to 3 % by weight, preferably 0.01 to 2 % by weight, more preferably 0.05 to 1 % by weight, still more preferably 0.05 to 0.5 % by weight. Within this range, physical property balance may be excellent, and mechanical properties and melt flow rate may be improved.

When necessary, the thermoplastic resin composition may further include one or more selected from the group consisting of a dye, a pigment, a flame retardant, and an inorganic filler. In this case, based on 100 parts by weight in total of the thermoplastic resin composition (the polybutylene terephthalate resin (A) + the polyethylene terephthalate resin (B) + the acrylate-aromatic vinyl compound-vinyl cyanide compound graft copolymer (C) + the aromatic vinyl compound-vinyl cyanide compound copolymer (D) + the glass fiber (E) + the carbodiimide-based compound (F) + the epoxy compound (G) + the hindered amine-based light stabilizer (H)), each of the additives may be included in an amount of 0.01 to 5 parts by weight, preferably 0.05 to 3 parts by weight, more preferably 0.1 to 2 parts by weight, still more preferably 0.5 to 1 part by weight. Within this range, required physical properties may be efficiently expressed without deterioration of the intrinsic properties of the thermoplastic resin composition of the present invention.

UV stabilizers, dyes, pigments, flame retardants, and inorganic fillers commonly used in the art to which the present invention pertains may be used in the present invention without particular limitation.

## Thermoplastic resin composition

When flexural strength is measured at a span of 64 mm and a speed of 2 mm/min according to ISO 178 before and

after the Air-HAST test (120 °C, RH: 85 %, air partial pressure: 0.06 MPa, 96 hours), and flexural strength retention rate is calculated by Equation 1 below, the thermoplastic resin composition may have a flexural strength retention rate of preferably 60 % or more, more preferably 60 to 75 %, still more preferably 64 to 70 %. Within this range, mechanical properties, particularly flexural strength, may be maintained under high-temperature and high-humidity environments, and thus the thermoplastic resin composition may satisfy product reliability required for automotive exterior materials and materials for electronic components.

$$\text{Flexural strength retention rate (\%)} = [FS'/FS] \times 100 \qquad \text{[Equation 1]}$$

In Equation 1, FS is flexural strength before the Air-HAST test, and FS' is flexural strength after the Air-HAST test.

In the present disclosure, specifically, the Air-HAST test means that a specimen is placed in a high-temperature, high-humidity bath in a chamber set to a temperature of 120 °C, a relative humidity (RH) of 85%, and an air partial pressure of 0.06 MPa, and left for 96 hours.

The thermoplastic resin composition may have a flexural strength of preferably 180 MPa or more, more preferably 190 MPa or more, still more preferably 200 MPa or more, still more preferably 200 to 220 MPa, still more preferably 200 to 210 MPa as measured at a span 64 mm and a speed of 2 mm/min according to ISO 178. Within this range, mechanical properties and balance between all physical properties may be excellent.

The thermoplastic resin composition may have a flexural modulus of preferably 8,000 MPa or more, more preferably 8,000 to 10,000 MPa, still more preferably 8,000 to 9,000 MPa as measured at a span of 64 mm and a speed of 2 mm/min according to ISO 178. Within this range, mechanical properties and balance between all physical properties may be excellent.

The thermoplastic resin composition may have a melt flow rate of preferably 6 g/10 min or more, more preferably 8 g/10 min or more, still more preferably 9 g/10 min or more, still more preferably 9 to 10 g/10 min as measured at 260 °C under a load of 2.16 kg according to ISO 1133. Within this range, balance between all physical properties may be excellent, and processability and injection moldability may also be excellent.

The thermoplastic resin composition may have a tensile strength of preferably 145 MPa or more, more preferably 150 MPa or more, still more preferably 155 MPa or more, still more preferably 155 to 165 MPa as measured at a speed of 50 mm/min according to ISO 527. Within this range, mechanical strength and balance between all physical properties may be excellent.

The thermoplastic resin composition may have an Izod impact strength of 7 $kJ/m^2$ or more, more preferably 8 $kJ/m^2$ or more, still more preferably 9 $kJ/m^2$ or more, still more preferably 9 to 11 $kJ/m^2$, still more preferably 9 to 10 $kJ/m^2$ as measured at room temperature using a notched specimen having a thickness of 4 mm according to ISO 180/1A. Within this range, mechanical strength and balance between all physical properties may be excellent.

In the present disclosure, room temperature may be within the range of 20 $\pm$ 5 °C.

The thermoplastic resin composition may have an Izod impact strength of preferably 6 $kJ/m^2$ or more, more preferably 7 $kJ/m^2$ or more, still more preferably 8 $kJ/m^2$ or more, still more preferably 8 to 10 $kJ/m^2$, still more preferably 8 to 9 $kJ/m^2$ as measured at a low temperature (-30°C) using a notched specimen having a thickness of 4 mm according to ISO 180/1A. Within this range, mechanical strength and balance between all physical properties may be excellent.

The thermoplastic resin composition may have an elongation of preferably 1% or more, more preferably 2% or more, still more preferably 2.5 % or more, still more preferably 2.5 to 3.5 % as measured at a speed of 50 mm/min according to ISO 527. Within this range, mechanical strength and balance between all physical properties may be excellent.

The thermoplastic resin composition may have a heat deflection temperature of preferably 180 °C or higher, more preferably 180 to 210 °C, still more preferably 180 to 205 °C, still more preferably 185 to 200 °C as measured under a high load of 1.82 MPa according to ISO 75. Within this range, balance between all physical properties may be excellent, and in particular, heat resistance may be excellent under a high load.

The thermoplastic resin composition may have a heat deflection temperature of preferably 205 °C or higher, more preferably 210 °C or higher, still more preferably 210 to 230 °C, still more preferably 215 to 225 °C, still more preferably 217 to 223 °C as measured under a low load of 0.45 MPa according to ISO 75. Within this range, balance between all physical properties may be excellent, and in particular, heat resistance may be excellent under a low load.

The thermoplastic resin composition may have a density of preferably 1.48 $g/cm^3$ or less, more preferably 1.44 to 1.48 $g/cm^3$, still more preferably 1.45 to 1.47 $g/cm^3$ as measured according to ISO 1183-1. Within this range, physical property balance may be excellent, and weight reduction may be achieved.

## Method of preparing thermoplastic resin composition

A method of preparing a thermoplastic resin composition according to the present invention includes a step of melt-kneading and extruding, at 200 to 300 °C and 100 to 300 rpm, 30 to 50 % by weight of a polybutylene terephthalate

resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H). In this case, mechanical properties, such as impact strength, tensile strength, flexural strength, and flexural modulus, heat resistance, and hydrolysis resistance may be excellent, and thus the thermoplastic resin composition may be applied to automotive exterior materials and materials for electric/electronic parts.

For example, the kneading and extrusion may be performed using a single-screw extruder, a twin-screw extruder, and a Banbury mixer. In this case, the composition may be uniformly distributed, and thus compatibility may be excellent.

For example, the kneading and extrusion may be performed at a barrel temperature of 200 to 300 °C, preferably 230 to 280 °C, more preferably 250 to 270 °C. In this case, throughput per unit time may be excellent, and thermal decomposition of resin components may be prevented.

For example, the kneading and extrusion may be performed at a screw rotation rate of 100 to 300 rpm, preferably 150 to 300 rpm, more preferably 200 to 300 rpm, still more preferably 230 to 270 rpm. In this case, throughput per unit time and process efficiency may be excellent, and excessive cutting of glass fiber may be prevented.

For example, the thermoplastic resin composition obtained by extrusion may be made into pellets using a pelletizer.

## Molded article

For example, a molded article of the present invention includes the thermoplastic resin composition of the present invention. In this case, mechanical properties, such as impact strength, tensile strength, flexural strength, and flexural modulus, heat resistance, and flexural strength retention rate may be excellent, and thus the molded article may satisfy product reliability required for automotive exterior materials and materials for electric/electronic parts.

The molded article may be preferably an automotive exterior material or an electric/electronic part. In this case, mechanical properties, such as impact strength, tensile strength, flexural strength, and flexural modulus, heat resistance, and flexural strength retention rate may be excellent, and thus the molded article may satisfy product reliability required for automotive exterior materials and materials for electric/electronic parts.

A method of manufacturing the molded article preferably includes a step of preparing pellets by melt-kneading and extruding, at 200 to 300 °C and 100 to 300 rpm, 30 to 50 % by weight of a polybutylene terephthalate resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H); and a step of injecting the prepared pellets using an injection machine. In this case, physical property balance and injection processability may be excellent.

In describing the thermoplastic resin composition of the present invention, the method of preparing the same, and the molded article including the same, other conditions or equipment that are not explicitly described may be appropriately selected without particular limitation within the range commonly practiced in the art.

Hereinafter, the present invention will be described in more detail with reference to the following preferred examples. However, these examples are provided for illustrative purposes only and should not be construed as limiting the scope of the invention defined by the appended claims.

[Examples]

Materials used in Examples and Comparative Examples below are as follows.

* A-1: Polybutylene terephthalate having an intrinsic viscosity of 0.8 dl/g
* A-2: Polybutylene terephthalate having an intrinsic viscosity of 1.0 dl/g
* B-1: Polyethylene terephthalate homopolymer having an intrinsic viscosity of 0.8 dl/g
* C-1: Acrylate-styrene-acrylonitrile graft copolymer (graft copolymer obtained by graft-polymerizing 41 % by weight of butyl acrylate rubber, 34 % by weight of styrene, and 25 % by weight of acrylonitrile, grafting degree: 35 %)
* D-1: Styrene-acrylonitrile copolymer (copolymer obtained by polymerizing 72 % by weight of styrene and 28 % by weight of acrylonitrile, weight average molecular weight: 130,000 g/mol)
* D-2: Styrene-acrylonitrile copolymer (copolymer obtained by polymerizing 76 % by weight of styrene and 24 % by weight of acrylonitrile, weight average molecular weight: 120,000 g/mol)
* E-1 (glass fiber): Glass fiber (average length: 3 mm, average particle diameter: 10 μm) including 52 % by weight of $SiO_2$, 18 % by weight of $Al_2O_3$, 16 % by weight of CaO, and 14 % by weight of other components including MaO

* F (polycarbodiimide): Polycarbodiimide including an aromatic ring (aromatic polycarbodiimide)
* G (epoxy compound): Novolac epoxy resin (O-cresol novolac epoxy resin)
* H-1 (hindered amine-based light stabilizer): poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]
* H-2 (benzotriazole-based light stabilizer): 2-(2H-Benzotriazol-2yl)-4,6-bis(1-methyl-1-phenylethyl)phenol
* K (phenol-based antioxidant): Pentaerythritol tetrakis(3-(3,5-di-tert-butyl-4-hydroxyphenyl)propionate)
* L (polyethylene wax): LDPE Wax
* M (transesterification inhibitor): Sodium phosphate monobasic ($NaH_2PO_4$)

Examples 1 to 9 and Comparative Examples 1 to 9

According to the contents and components shown in Tables 1 and 2, the components were fed into an extruder (42Ψ) and melt-kneaded and extruded at 260 °C and 250 rpm to prepare pellets. Then, the pellets were injected to prepare a specimen for measuring physical properties.

[Test Examples]

The properties of the specimens prepared in Examples 1 to 9 and Comparative Examples 1 to 9 were measured according to the following methods, and the results are shown in Tables 1 and 2 below.

Measurement methods

**[0145]** * Melt flow rate: Melt flow rate was measured at 260 °C under a load of 2.16 kg for 10 minutes according to ISO 1133. Here, the unit of melt flow rate is g/10 min.
**[0146]** * Izod impact strength (KJ/$m^2$): Using a notched specimen having a thickness of 4 mm, Izod impact strength was measured at 23 °C and -30 °C according to ISO 180/1A, respectively.
**[0147]** * Tensile strength (MPa) and elongation (%): Tensile strength and elongation were measured at a speed of 50 mm/min according to ISO 527.
**[0148]** * Flexural strength (MPa) and Flexural modulus (MPa): Using a specimen having a thickness of 4 mm, flexural strength and flexural modulus were measured at a span of 64 mm and a test speed of 2 mm/min according to ISO 178.
**[0149]** * Heat deflection temperature (HDT, °C): Heat deflection temperature was measured under a pressure of 1.80 MPa and 0.45 MPa according to ISO 75, respectively.
**[0150]** * Flexural strength retention rate (%): The flexural strength of a specimen before and after the Air-HAST test was measured at a span of 64 mm and a speed of 2 mm/min according to ISO 178, and Flexural strength retention rate thereof was calculated by Equation 1 below.
The Air-HAST test was performed by placing a specimen in a high-temperature, high-humidity bath set to a temperature of 120 °C, a relative humidity (RH) of 85%, and an air partial pressure of 0.06 MPa and leaving the specimen for 96 hours.

[Equation 1]

$$\text{Flexural strength retention rate (\%)} = [FS'/FS] \times 100$$

In Equation 1, FS is flexural strength before the Air-HAST test, and FS' is flexural strength after the Air-HAST test.
**[0153]** * Density (g/$cm^3$): Density was measured according to ISO 1183-1.

[Table 1]

| Classification (wt%) | Examples | | | | | | | | |
|---|---|---|---|---|---|---|---|---|---|
| | 1 | 2 | 3 | 4 | 5 | 6 | 7 | 8 | 9 |
| A-1 | 39. 1 | 39. 1 | | 38. 8 | 38. 7 | 38. 9 | 42. 1 | 42. 1 | 42. 1 |
| A-2 | | | 39.1 0 | | | | | | |
| B-1 | 13 | 13 | 13 | 13 | 13 | 13 | 10 | 13 | 13 |

(continued)

| Classification (wt%) | Examples | | | | | | | | |
|---|---|---|---|---|---|---|---|---|---|
| | 1 | 2 | 3 | 4 | 5 | 6 | 7 | 8 | 9 |
| C-1 | 8 | 8 | 8 | 8 | 8 | 8 | 8 | 5 | 8 |
| D-1 | 8 | | 8 | 8 | 8 | 8 | 8 | 8 | 5 |
| D-2 | | 8 | | | | | | | |
| E-1 | 30 | 30 | 30 | 30 | 30 | 30 | 30 | 30 | 30 |
| F (carbodiimide ) | 0.2 | 0.2 | 0.2 | 0.5 | 0.2 | 0.2 | 0.2 | 0.2 | 0.2 |
| G (epoxy) | 0.6 | 0.6 | 0.6 | 0.6 | 1.0 | 0.6 | 0.6 | 0.6 | 0.6 |
| H-1 (HALS) | 0.3 0 | 0.3 0 | 0.30 | 0.3 0 | 0.3 0 | 0.5 0 | 0.3 0 | 0.3 0 | 0.3 0 |
| K | 0.4 | 0.4 | 0.4 | 0.4 | 0.4 | 0.4 | 0.4 | 0.4 | 0.4 |
| L | 0.3 | 0.3 | 0.3 | 0.3 | 0.3 | 0.3 | 0.3 | 0.3 | 0.3 |
| M | 0.1 | 0.1 | 0.1 | 0.1 | 0.1 | 0.1 | 0.1 | 0.1 | 0.1 |
| Physical properties | | | | | | | | | |
| Melt flow rate (g/10 min) | 9.4 | 9.2 | 6.4 | 9.0 | 7.2 | 9.3 | 8.8 | 9.1 | 9.5 |
| Izod impact strength (23 °C, KJ/m$^2$) | 9.3 | 9.5 | 10.1 | 9.2 | 9.3 | 9.6 | 9.7 | 8.9 | 9.6 |
| Izod impact strength (-30 °C, KJ/m$^2$) | 8.4 | 8.5 | 9.2 | 8.3 | 8.6 | 8.5 | 8.6 | 8.0 | 8.4 |
| Tensile strength (MPa) | 156 | 158 | 153 | 157 | 157 | 156 | 155 | 157 | 158 |
| Elongation (%) | 2.9 | 2.7 | 2.9 | 2.8 | 2.9 | 2.8 | 2.7 | 2.8 | 2.9 |
| Flexural strength (MPa) | 206 | 208 | 204 | 207 | 209 | 208 | 206 | 206 | 207 |
| Flexural modulus (MPa) | 823 0 | 808 0 | 8150 | 825 0 | 801 0 | 827 0 | 814 0 | 820 0 | 818 0 |
| Heat | 192 | 184 | 190 | 190 | 191 | 191 | 190 | 191 | 187 |
| deflection temperature (1.80 MPa, °C) | | | | | | | | | |
| Heat deflection temperature (0.45 MPa, °C) | 218 | 216 | 217 | 218 | 217 | 217 | 218 | 216 | 218 |
| Density (g/cm$^3$) | 1.4 6 | 1.4 7 | 1.46 | 1.4 6 | 1.4 6 | 1.4 6 | 1.4 6 | 1.4 6 | 1.4 6 |
| Flexural strength retention rate (%) | 65. 7 | 61. 6 | 64.3 | 67. 2 | 68. 3 | 65. 9 | 66. 2 | 65. 8 | 64. 9 |

[Table 2]

| Classificatio n (wt%) | Comparative Examples | | | | | | | | |
|---|---|---|---|---|---|---|---|---|---|
| | 1 | 2 | 3 | 4 | 5 | 6 | 7 | 8 | 9 |
| A-1 | 39.5 5 | 39.3 0 | 40.2 0 | 39. 1 | 37. 8 | 39. 3 | 37. 7 | 37. 4 | 39. 3 |
| A-2 | | | | | | | | | |
| B-1 | 13 | 13 | 13 | 13 | 13 | 13 | 13 | 13 | 13 |
| C-1 | 8 | 8 | 8 | 8 | 8 | 8 | 8 | 8 | 8 |
| D-1 | 8 | 8 | 8 | 8 | 8 | 8 | 8 | 8 | 8 |
| D-2 | | | | | | | | | |
| E-1 | 30 | 30 | 30 | 30 | 30 | 30 | 30 | 30 | 30 |
| F (carbodiimide ) | 0.1 | 0.2 | 0 | 0.2 | 1.5 | 0 | 0.2 | 0.2 | 0.2 |

(continued)

| Classificatio n (wt%) | Comparative Examples | | | | | | | | |
|---|---|---|---|---|---|---|---|---|---|
| | 1 | 2 | 3 | 4 | 5 | 6 | 7 | 8 | 9 |
| G (epoxy) | 0.4 | 0.4 | 0 | 0.6 | 0.6 | 0.6 | 2 | 0.6 | 0.6 |
| H-1 (HALS) | 0.15 | 0.30 | 0 | 0 | 0.3 0 | 0.3 0 | 0.3 0 | 2 | 0.1 |
| H-2 | | | | 0.3 0 | | | | | |
| K | 0.4 | 0.4 | 0.4 | 0.4 | 0.4 | 0.4 | 0.4 | 0.4 | 0.4 |
| L | 0.3 | 0.3 | 0.3 | 0.3 | 0.3 | 0.3 | 0.3 | 0.3 | 0.3 |
| M | 0.1 | 0.1 | 0.1 | 0.1 | 0.1 | 0.1 | 0.1 | 0.1 | 0.1 |
| Physical properties | | | | | | | | | |
| Melt flow rate (g/10 min) | 10.8 | 10.6 | 14.2 | 9.2 | 6.8 | 11. 2 | 4.1 | 7.2 | 9.2 |
| Izod impact strength (23 °C, KJ/m$^2$) | 8.9 | 9.1 | 8.1 | 9.4 | 8.5 | 9.3 | 9.4 | 8.5 | 9.3 |
| Izod impact strength (-30°C, KJ/m$^2$ ) | 8 | 8.2 | 7.2 | 8.4 | 7.2 | 8.1 | 8.4 | 7.3 | 8.2 |
| Tensile strength | 154 | 154 | 139 | 155 | 153 | 155 | 156 | 152 | 155 |
| (MPa) | | | | | | | | | |
| Elongation (%) | 2.8 | 2.9 | 2.4 | 2.9 | 2.9 | 2.9 | 2.9 | 2.9 | 2.9 |
| Flexural strength (MPa) | 202 | 207 | 200 | 205 | 201 | 205 | 208 | 200 | 205 |
| Flexural modulus (MPa) | 8200 | 8020 | 8190 | 825 0 | 792 0 | 825 0 | 867 0 | 790 0 | 825 0 |
| Heat deflection temperature (1.80 MPa, °C) | 187 | 193 | 196 | 191 | 188 | 192 | 191 | 187 | 191 |
| Heat deflection temperature (0.45 MPa, °C) | 217 | 218 | 218 | 218 | 216 | 217 | 218 | 214 | 218 |
| Density (g/cm$^3$) | 1.47 | 1.47 | 1.46 | 1.4 6 | 1.4 7 | 1.4 6 | 1.4 7 | 1.4 6 | 1.4 6 |
| Flexural strength retention rate (%) | 47.7 | 50.8 | 39.6 | 58. 6 | 66. 1 | 44. 1 | 66. 7 | 64. 6 | 53. 1 |

As shown in Tables 1 and 2, in the case of Examples 1 to 9 according to the present invention, compared to Comparative Examples 1 to 9 outside the range of the present invention, melt flow rate, mechanical properties, heat resistance, density, and flexural strength retention rate are excellent. As a notable result, in the case of Examples 1 and 2 and Examples 4 to 9 including the polybutylene terephthalate (A) having an intrinsic viscosity of 0.6 to 0.9 dl/g, due to excellent melt flow rate, injection moldability and processability are further improved. In addition, Example 1 including the styrene-acrylonitrile copolymer (D-1) has a higher flexural strength retention rate than Example 2 including the styrene-acrylonitrile copolymer (D-2).

In addition, in the case of Comparative Example 1 including the carbodiimide-based compound (F), the epoxy compound (G), and the hindered amine-based light stabilizer (H) in an amount less than the range of the present invention and Comparative Example 2 including the epoxy compound (G) in an amount less than the range of the present invention, flexural strength retention rate is significantly reduced.

In addition, in the case of Comparative Example 3 not including the carbodiimide-based compound (F), the epoxy compound (G), and the hindered amine-based light stabilizer (H), tensile strength and flexural strength retention rate are reduced. In the case of Comparative Example 4 including a light stabilizer other than the hindered amine-based light stabilizer (H-1), flexural strength retention rate is low.

In addition, in the case of Comparative Example 5 including the carbodiimide-based compound (F) in an amount exceeding the range of the present invention, flexural modulus is low. In the case of Comparative Example 6 not including the carbodiimide-based compound (F), flexural strength retention rate is significantly reduced.

In addition, Comparative Example 7 including the epoxy compound (G) in an amount exceeding the range of the present invention has a low melt flow rate. Comparative Example 8 including the hindered amine-based light stabilizer (H-1) in an amount exceeding the range of the present invention has a low flexural modulus. Comparative Example 9

including the hindered amine-based light stabilizer (H-1) in an amount less than the range of the present invention has a low flexural strength retention rate.

In conclusion, the present invention has an effect of providing a thermoplastic resin composition having excellent mechanical properties and heat resistance and an excellent flexural strength retention rate after the Air-HAST test by including the polybutylene terephthalate resin, the polyethylene terephthalate, the acrylate-aromatic vinyl compound-vinyl cyanide compound graft copolymer, the aromatic vinyl compound-vinyl cyanide compound copolymer, the glass fiber, the carbodiimide-based compound, the epoxy compound, and the hindered amine-based light stabilizer according to the present invention in a predetermined content ratio, a method of preparing the thermoplastic resin composition, and a molded article including the thermoplastic resin composition. With these advantages, the thermoplastic resin composition may satisfy product reliability required for automotive exterior materials and materials for electric/electronic parts.

## Claims

**1.** A thermoplastic resin composition, comprising:

30 to 50 % by weight of a polybutylene terephthalate resin (A);
8 to 20 % by weight of a polyethylene terephthalate resin (B);
3 to 15 % by weight of an acrylate-aromatic vinyl compound-vinyl cyanide compound graft copolymer (C);
3 to 15 % by weight of an aromatic vinyl compound-vinyl cyanide compound copolymer (D);
25 to 40 % by weight of glass fiber (E);
0.15 to 1 % by weight of a carbodiimide-based compound (F);
0.5 to 1.5 % by weight of an epoxy compound (G); and
0.25 to 1.2 % by weight of a hindered amine-based light stabilizer (H).

**2.** The thermoplastic resin composition according to claim 1, wherein the polybutylene terephthalate resin (A) has an intrinsic viscosity of 0.6 to 0.9 dl/g, determined as defined in the specification.

**3.** The thermoplastic resin composition according to claim 1, wherein the polyethylene terephthalate resin (B) is a homopolymer.

**4.** The thermoplastic resin composition according to claim 1, wherein the acrylate-aromatic vinyl compound-vinyl cyanide compound graft copolymer (C) comprises 23 to 35 % by weight of a vinyl cyanide compound based on a total weight thereof.

**5.** The thermoplastic resin composition according to claim 1, wherein the aromatic vinyl compound-vinyl cyanide compound copolymer (D) comprises 26 to 40 % by weight of a vinyl cyanide compound based on a total weight thereof.

**6.** The thermoplastic resin composition according to claim 1, wherein the glass fiber (E) comprises 50 to 70 % by weight of silica ($SiO_2$) based on a total weight thereof.

**7.** The thermoplastic resin composition according to claim 1, wherein the carbodiimide-based compound (F) comprises a compound represented by Chemical Formula 1 below, a compound represented by Chemical Formula 2 below, or a mixture thereof:

[Chemical Formula 1]

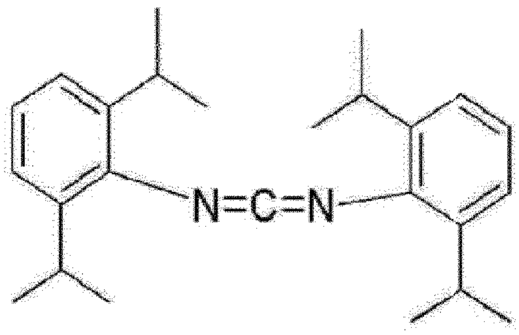

[Chemical Formula 2]

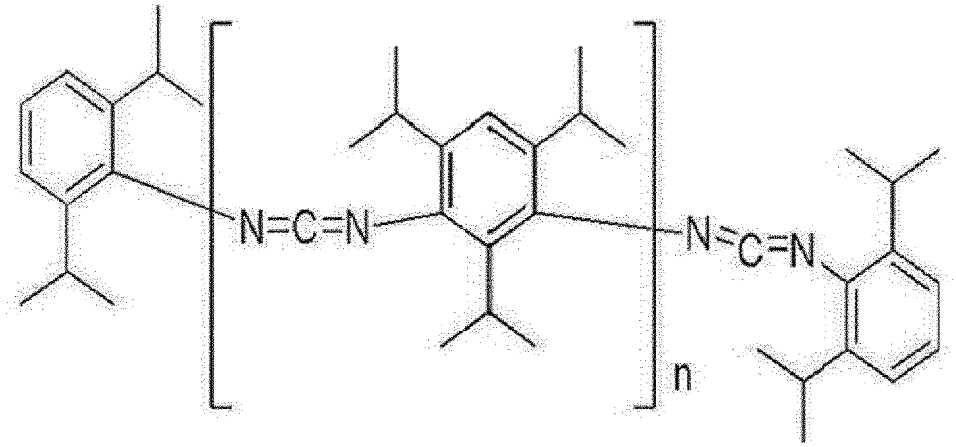

,

wherein, in Chemical Formula 2, n is an integer from 1 to 15.

8. The thermoplastic resin composition according to claim 1, wherein the epoxy compound (G) comprises one or more selected from the group consisting of an aromatic epoxy resin, an alicyclic epoxy resin, and an aliphatic epoxy resin.

9. The thermoplastic resin composition according to claim 1, wherein the hindered amine-based light stabilizer (H) comprises one or more selected from the group consisting of poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]], bis(2,2,6,6-tetramethyl-4-piperidyl)sebacate, decanedioic acid bis(2,2,6,6-tetramethyl-1-(octyloxy)-4-piperidinyl)ester, 1,1-dimethylethylhydroperoxide, bis(1,2,2,6,6-pentamethyl-4-piperidyl[[3,5-bis(1,1-dimethylethyl)-4-hydroxyphenyl]methyl]butylmalonate, bis(1,2,2,6,6-pentamethyl-4-piperidyl)-sebacate, and methyl-1,2,2,6,6-pentamethyl-4-piperidylsebacate.

10. The thermoplastic resin composition according to claim 1, wherein, when flexural strength is measured at a span of 64 mm and a speed of 2 mm/min according to ISO 178 before and after an Air-HAST test (120 °C, RH: 85 %, air partial pressure: 0.06 MPa, 96 hours), and flexural strength retention rate is calculated by Equation 1 below, the thermoplastic resin composition has a flexural strength retention rate of 60 % or more: [Equation 1]

$$\text{Flexural strength retention rate (\%)} = [FS'/FS] \times 100,$$

wherein FS is flexural strength before the Air-HAST test, and FS' is flexural strength after the Air-HAST test.

11. The thermoplastic resin composition according to claim 1, wherein the thermoplastic resin composition has a melt flow rate of 6 g/10 min or more as measured at 260 °C under a load of 2.16 kg according to ISO 1133.

12. The thermoplastic resin composition according to claim 1, wherein the thermoplastic resin composition has a tensile strength of 145 MPa or more as measured at a speed of 50 mm/min according to ISO 527.

13. A method of preparing a thermoplastic resin composition, comprising melt-kneading and extruding, at 200 to 300 °C and 100 to 300 rpm, 30 to 50 % by weight of a polybutylene terephthalate resin (A), 8 to 20 % by weight of a polyethylene terephthalate resin (B), 3 to 15 % by weight of an acrylate-aromatic vinyl compound-vinyl cyanide compound graft copolymer (C), 3 to 15 % by weight of an aromatic vinyl compound-vinyl cyanide compound copolymer (D), 25 to 40 % by weight of glass fiber (E), 0.15 to 1 % by weight of a carbodiimide-based compound (F), 0.5 to 1.5 % by weight of an epoxy compound (G), and 0.25 to 1.2 % by weight of a hindered amine-based light stabilizer (H).

14. A molded article, comprising the thermoplastic resin composition according to any one of claims 1 to 12.

15. The molded article according to claim 14, wherein the molded article is an automotive exterior material or an electric/electronic part.

## Patentansprüche

1. Thermoplastische Harzzusammensetzung, umfassend:

   30 bis 50 Gew.-% eines Polybutylenterephthalatharzes (A);
   8 bis 20 Gew.-% eines Polyethylenterephthalatharzes (B);
   3 bis 15 Gew.-% eines Acrylat-aromatische-Vinylverbindung-Vinylcyanidverbindung-Pfropfcopolymers (C);
   3 bis 15 Gew.-% eines aromatische-Vinylverbindung-Vinylcyanidverbindung-Copolymers (D);
   25 bis 40 Gew.-% Glasfaser (E);
   0,15 bis 1 Gew.-% einer Carbodiimid-basierten Verbindung (F);
   0,5 bis 1,5 Gew.-% einer Epoxyverbindung (G); und
   0,25 bis 1,2 Gew.-% eines gehindertes-Amin-basierten Lichtstabilisators (H).

2. Thermoplastische Harzzusammensetzung nach Anspruch 1, wobei das Polybutylenterephthalatharz (A) eine Grenzviskosität von 0,6 bis 0,9 dl/g aufweist, bestimmt wie in der Beschreibung definiert.

3. Thermoplastische Harzzusammensetzung nach Anspruch 1, wobei das Polyethylenterephthalatharz (B) ein Homopolymer ist.

4. Thermoplastische Harzzusammensetzung nach Anspruch 1, wobei das Acrylat-aromatische-Vinylverbindung-Vinylcyanidverbindung-Pfropfcopolymer (C) 23 bis 35 Gew.-% einer Vinylcyanidverbindung, bezogen auf ein Gesamtgewicht davon, umfasst.

5. Thermoplastische Harzzusammensetzung nach Anspruch 1, wobei das aromatische-Vinylverbindung-Vinylcyanidverbindung-Copolymer (D) 26 bis 40 Gew.-% einer Vinylcyanidverbindung, bezogen auf ein Gesamtgewicht davon, umfasst.

6. Thermoplastische Harzzusammensetzung nach Anspruch 1, wobei die Glasfaser (E) 50 bis 70 Gew.-% Siliciumdioxid ($SiO_2$), bezogen auf ein Gesamtgewicht davon, umfasst.

7. Thermoplastische Harzzusammensetzung nach Anspruch 1, wobei die Carbodiimid-basierte Verbindung (F) eine durch die nachstehende chemische Formel 1 dargestellte Verbindung, eine durch die nachstehende chemische Formel 2 dargestellte Verbindung oder ein Gemisch davon umfasst:

[Chemische Formel 1]

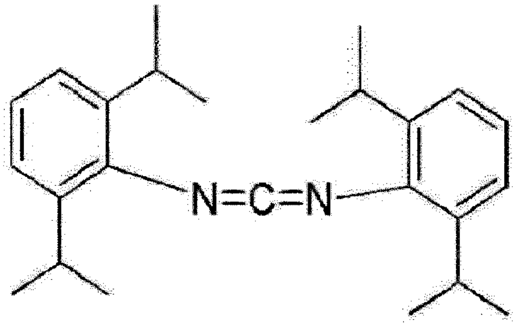

[Chemische Formel 2]

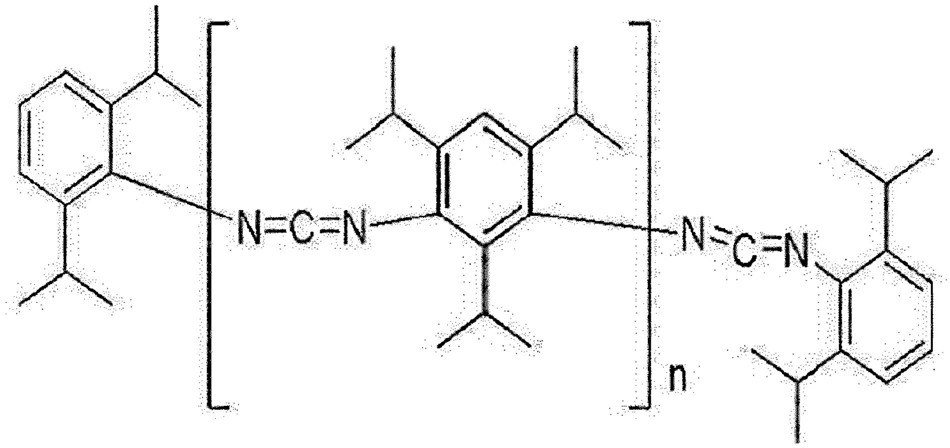

,

wobei in der chemischen Formel 2 n eine ganze Zahl von 1 bis 15 ist.

**8.** Thermoplastische Harzzusammensetzung nach Anspruch 1, wobei die Epoxyverbindung (G) eines oder mehrere, ausgewählt aus der Gruppe, bestehend aus einem aromatischen Epoxyharz, einem alicyclischen Epoxyharz und einem aliphatischen Epoxyharz, umfasst.

**9.** Thermoplastische Harzzusammensetzung nach Anspruch 1, wobei der gehindertes-Amin-basierte Lichtstabilisator (H) eines oder mehrere, ausgewählt aus der Gruppe, bestehend aus Poly[[6-[(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]], Bis(2,2,6,6-tetramethyl-4-piperidyl)sebacat, Decandi*säure-bis*(2,2,6,6-tetramethyl-1-(octyloxy)-4-piperidinyl)ester, 1,1-Dimethylethylhydroperoxid, Bis(1,2,2,6,6-pentamethyl-4-piperidyl[[3,5-bis(1,1-dimethylethyl)-4-hydroxyphenyl]methyl]butylmalonat, Bis(1,2,2,6,6-pentamethyl-4-piperidyl)sebacat und Methyl-1,2,2,6,6-pentamethyl-4-piperidylsebacat, umfasst.

**10.** Thermoplastische Harzzusammensetzung nach Anspruch 1, wobei, wenn die Biegefestigkeit bei einer Spanne von 64 mm und einer Geschwindigkeit von 2 mm/min gemäß ISO 178 vor und nach einem Air-HAST-Test (120 °C, RH: 85 %, Luftpartialdruck: 0,06 MPa, 96 Stunden) gemessen wird und die Biegefestigkeit-Retentionsrate durch die nachstehende Gleichung 1 berechnet wird, die thermoplastische Harzzusammensetzung eine Biegefestigkeit-Retentionsrate von 60 % oder mehr aufweist:

[Gleichung 1]

$$\text{Biegefestigkeit-Retentionsrate (\%)} = [FS'/FS] \times 100,$$

wobei FS die Biegefestigkeit vor dem Air-HAST-Test ist und FS' die Biegefestigkeit nach dem Air-HAST-Test ist.

**11.** Thermoplastische Harzzusammensetzung nach Anspruch 1, wobei die thermoplastische Harzzusammensetzung eine Schmelzflussrate von 6 g/10 min oder mehr, wie bei 260 °C unter einer Last von 2,16 kg gemäß ISO 1133 gemessen, aufweist.

**12.** Thermoplastische Harzzusammensetzung nach Anspruch 1, wobei die thermoplastische Harzzusammensetzung eine Zugfestigkeit von 145 MPa oder mehr, wie bei einer Geschwindigkeit von 50 mm/min gemäß ISO 527 gemessen, aufweist.

**13.** Verfahren zum Herstellen einer thermoplastischen Harzzusammensetzung, umfassend Schmelzkneten und Extrudieren, bei 200 bis 300 °C und 100 bis 300 U/min, von 30 bis 50 Gew.-% eines Polybutylenterephthalatharzes (A), 8 bis 20 Gew.-% eines Polyethylenterephthalatharzes (B), 3 bis 15 Gew.-% eines Acrylat-aromatische-Vinylverbindung-Vinylcyanidverbindung-Pfropfcopolymers (C), 3 bis 15 Gew.-% eines aromatische-Vinylverbindung-Vinylcyanidverbindung-Copolymers (D), 25 bis 40 Gew.-% Glasfaser (E), 0,15 bis 1 Gew.-% einer Carbodiimid-basierten Verbindung (F), 0,5 bis 1,5 Gew.-% einer Epoxyverbindung (G) und 0,25 bis 1,2 Gew.-% eines gehindertes-Amin-basierten Lichtstabilisators (H).

**14.** Formkörper, umfassend die thermoplastische Harzzusammensetzung nach einem der Ansprüche 1 bis 12.

**15.** Formkörper nach Anspruch 14, wobei der Formkörper ein Automobilaußenmaterial oder ein elektrisches/elektronisches Teil ist.

## Revendications

**1.** Composition de résine thermoplastique, comprenant :

30 à 50 % en poids d'une résine de polybutylène téréphtalate (A) ;
8 à 20 % en poids d'une résine de polyéthylène téréphtalate (B) ;
3 à 15 % en poids d'un copolymère greffé de composé de cyanure de vinyle-composé de vinyle aromatique-acrylate (C) ;
3 à 15 % en poids d'un copolymère de composé de cyanure de vinyle-composé de vinyle aromatique (D) ;
25 à 40 % en poids de fibre de verre (E) ;
0,15 à 1 % en poids d'un composé à base de carbodiimide (F) ;
0,5 à 1,5 % en poids d'un composé d'époxy (G) ; et
0,25 à 1,2 % en poids d'un photostabilisant à base d'amine encombrée (H).

**2.** Composition de résine thermoplastique selon la revendication 1, dans laquelle la résine de polybutylène téréphtalate (A) a une viscosité intrinsèque de 0,6 à 0,9 dl/g, déterminée comme défini dans la spécification.

**3.** Composition de résine thermoplastique selon la revendication 1, dans laquelle la résine de polyéthylène téréphtalate (B) est un homopolymère.

**4.** Composition de résine thermoplastique selon la revendication 1, dans laquelle le copolymère greffé de composé de cyanure de vinyle-composé de vinyle aromatique-acrylate (C) comprend 23 à 35 % en poids d'un composé de cyanure de vinyle sur la base de son poids total.

**5.** Composition de résine thermoplastique selon la revendication 1, dans laquelle le copolymère de composé de cyanure de vinyle-composé de vinyle aromatique (D) comprend 26 à 40 % en poids d'un composé de cyanure de vinyle sur la base de son poids total.

**6.** Composition de résine thermoplastique selon la revendication 1, dans laquelle la fibre de verre (E) comprend 50 à 70 % en poids de silice ($SiO_2$) sur la base de son poids total.

**7.** Composition de résine thermoplastique selon la revendication 1, dans laquelle le composé à base de carbodiimide (F) comprend un composé représenté par la Formule chimique 1 ci-dessous, un composé représenté par la Formule chimique 2 ci-dessous, ou un mélange des deux :

[Formule chimique 1]

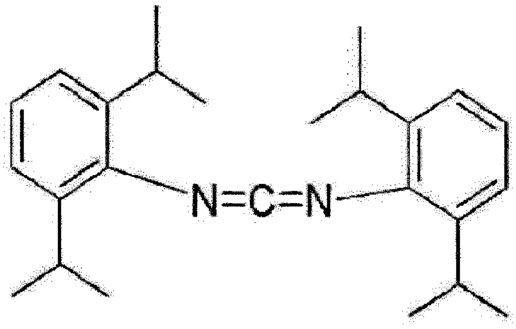

[Formule chimique 2]

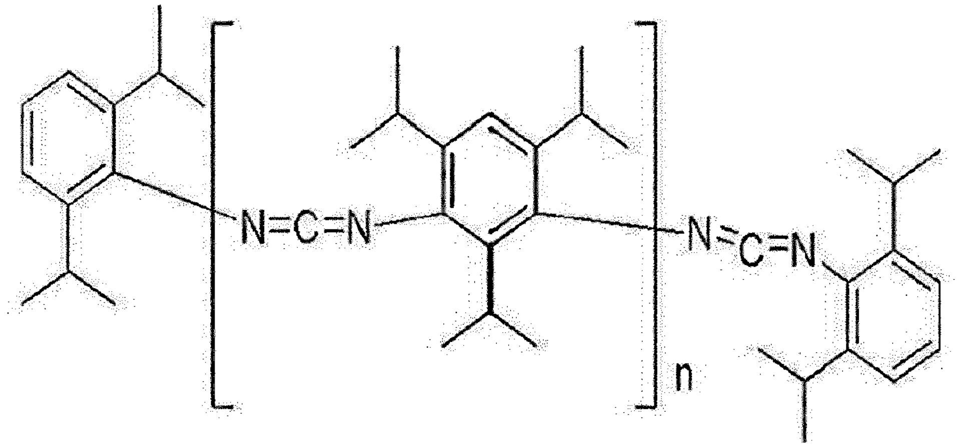

,

dans laquelle, dans la Formule chimique 2, n est un nombre entier de 1 à 15.

**8.** Composition de résine thermoplastique selon la revendication 1, dans laquelle le composé d'époxy (G) comprend un ou plusieurs éléments sélectionnés dans le groupe constitué d'une résine époxy aromatique, une résine époxy alicyclique et une résine époxy aliphatique.

**9.** Composition de résine thermoplastique selon la revendication 1, dans laquelle le photostabilisant à base d'amine encombrée (H) comprend un ou plusieurs éléments sélectionnés dans le groupe constitué de poly[[6-[(1,1,3,3-tétraméthylbutyl)amino]-1,3,5-triazine-2,4-diyl][(2,2,6,6-tétraméthyl-4-piperidinyl)imino]-1,6-hexanediyl[(2,2,6,6-tétraméthyl-4-piperidinyl)imino]], bis(2,2,6,6-tétraméthyl-4-piperidyl)sébacate, acide décanedioïque bis(2,2,6,6-tétraméthyl-1-(octyloxy)-4-piperidinyl)ester, 1,1-diméthyléthylhydroperoxide, bis(1,2,2,6,6-pentaméthyl-4-piperidyl[[3,5-bis(1,1-diméthyléthyl)-4-hydroxyphényl]méthyl]butylmalonate, bis(1,2,2,6,6-pentaméthyl-4-piperidyl)-sébacate et méthyl-1,2,2,6,6-pentaméthyl-4-piperidylsébacate.

**10.** Composition de résine thermoplastique selon la revendication 1, dans laquelle, quand la résistance à la flexion est mesurée à une portée de 64 mm et une vitesse de 2 mm/mn selon ISO 178 avant et après un essai Air-HAST (120°C, RH : 85 %, à pression partielle de l'air : 0,06 MPa, 96 heures) et qu'un taux de rétention de la résistance à la flexion est calculé par l'Équation 1 ci-dessous, la composition de résine thermoplastique a un taux de rétention de la résistance à la flexion de 60 % ou plus :

[Équation 1]

$$\text{Taux de rétention de la résistance à la flexion (\%)} = [FS'/FS] \times 100,$$

dans laquelle FS est la résistance à la flexion avant l'essai Air-HAST et FS' est la résistance à la flexion après l'essai Air-HAST.

**11.** Composition de résine thermoplastique selon la revendication 1, dans laquelle la composition de résine thermoplastique a un indice de fluage de 6 g/10 mn ou plus, mesuré à 260°C sous une charge de 2,16 kg selon ISO 1133.

**12.** Composition de résine thermoplastique selon la revendication 1, dans laquelle la composition de résine thermoplastique a une résistance à la traction de 145 MPa ou plus, mesurée à une vitesse de 50 mm/mn selon ISO 527.

**13.** Procédé de préparation d'une composition de résine thermoplastique, consistant à malaxer à l'état fondu et extruder, à 200 à 300°C et 100 à 300 tr/mn, 30 à 50 % en poids d'une résine de polybutylène téréphtalate (A), 8 à 20 % en poids d'une résine de polyéthylène téréphtalate (B), 3 à 15 % en poids d'un copolymère greffé de composé de cyanure de vinyle-composé de vinyle aromatique-acrylate (C), 3 à 15 % en poids d'un copolymère de composé de cyanure de vinyle-composé de vinyle aromatique (D), 25 à 40 % en poids de fibre de verre (E), 0,15 à 1 % en poids d'un composé à base de carbodiimide (F), 0,5 à 1,5 % en poids d'un composé d'époxy (G), et 0,25 à 1,2 % en poids d'un photostabilisant à base d'amine encombrée (H).

**14.** Article moulé, comprenant la composition de résine thermoplastique selon l'une quelconque des revendications 1 à 12.

**15.** Article moulé selon la revendication 14, dans lequel l'article moulé est un matériau extérieur pour automobile ou une pièce électrique/électronique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210116824
- KR 101201832 B1
- KR 20110066598 A